Europäisches Patentamt

European Patent Office

Office européen des brevets

(11) Veröffentlichungsnummer: **0 181 997 B1**

(19)

(12) **EUROPÄISCHE PATENTSCHRIFT**

(45) Veröffentlichungstag der Patentschrift: **01.07.92**

(51) Int. Cl.⁵: **A01D 34/86**, A01D 34/06

(21) Anmeldenummer: **85104744.9**

(22) Anmeldetag: **19.04.85**

(54) **Vorrichtung zur seitlich auskragenden Halterung eines Arbeitsgerätes an einem Fahrzeug.**

(30) Priorität: **23.05.84 DE 3419112**

(43) Veröffentlichungstag der Anmeldung:
**28.05.86 Patentblatt 86/22**

(45) Bekanntmachung des Hinweises auf die
Patenterteilung:
**01.07.92 Patentblatt 92/27**

(84) Benannte Vertragsstaaten:
**AT BE CH DE FR GB IT LI NL**

(56) Entgegenhaltungen:
**EP-A- 0 073 359        AT-B- 269 536**
**AT-B- 295 212         DE-A- 2 535 291**
**DE-A- 3 218 525       GB-A- 1 584 149**
**US-A- 4 241 565**

(73) Patentinhaber: **Maschinenfabrik Bermatingen**
**GmbH & Co.**
**Kesselbachstrasse 4**
**W-7775 Bermatingen(DE)**

(72) Erfinder: **Fleck, Alfons**
**Kesselbachstrasse 6**
**W-7775 Bermatingen(DE)**

(74) Vertreter: **Engelhardt, Guido, Dipl.-Ing.**
**Patentanwalt Montafonstrasse 35 Postfach**
**1350**
**W-7990 Friedrichshafen 1(DE)**

**Beschreibung**

Die Erfindung bezieht sich auf eine Vorrichtung zur seitlich auskragenden Halterung eines Arbeitsgerätes an einem Fahrzeug, insbesondere eines Randstreifenmähers, bestehend aus einem an der Front- oder Heckseite des Fahrzeuges anbringbaren Tragrahmen, an dem das Bodenbearbeitungswerkzeuge aufnehmende, vorzugsweise als Schwenkarm ausgebildete Arbeitsgerät über einen verschwenkbar gelagerten Traghebel derart angelenkt ist, daß das Arbeitsgerät um eine in Fahrtrichtung der Vorrichtung verlaufende Achse verschwenkbar gehalten ist und wobei der Tragrahmen mit einem Joch versehen ist, das um eine weitere in Fahrtrichtung der Vorrichtung angebrachte Achse begrenzt verschwenkbar ist, und der Traghebel konzentrisch zu der Schwenkachse des Joches verschwenkbar gelagert und an diesem abgestützt ist.

Durch die US-A 4 241 565 ist eine Vorrichtung dieser Art bekannt. Das Arbeitsgerät kann bei dieser Ausgestaltung zwar, um Böschungen mähen zu können, verschwenkt und auf deren Neigung eingestellt werden, da dieses aber lediglich um in Fahrtrichtung verlaufende Achsen verschwenkbar gehalten ist, ist eine zufriedenstellende Anpassung an unterschiedliche Bodenformen nicht zu bewerkstelligen. Das Fahrzeug muß nämlich jeweils in einem exakten Abstand zur Böschung verfahren werden und bei jeder Änderung des Neigungswinkels der Böschung ist die Schräglage des Arbeitsgerätes mit Hilfe von Servoeinrichtungen zu verändern, so daß nahezu ständig Nachstellungen vorzunehmen sind. Auch sind Beschädigungen der Bodenbearbeitungswerkzeuge unvermeidbar, da eine Bodenanpassung, insbesondere ein Abtasten der Bodenoberfläche und somit ein Kopieren, sowie das Umfahren von Hindernissen, wie z.B. größere Steine oder Baumstämme, nicht möglich sind. Diese Art der Halterung und Einstellung eines Arbeitsgerätes auf die Neigung einer Böschung ist demnach nicht praktikabel. Des weiteren ist, obwohl der Bauaufwand erheblich ist, eine Entlastung des Arbeitsgerätes nicht vorgesehen.

Aufgabe der Erfindung ist es daher, eine Vorrichtung zur seitlich auskragenden Halterung eines Arbeitsgerätes an einem Fahrzeug der eingangs genannten Gattung zu schaffen, mittels der es trotz einfacher Ausgestaltung möglich ist, problemlos eine Anpassung des Arbeitsgerätes an die jeweilige Bodenform vorzunehmen, ohne daß dazu der Tragrahmen zu verschwenken ist. Vor allem aber soll die Gewichtskraft des Arbeitsgerätes in jeder Betriebslage ausgeglichen werden, so daß dieses nur mit einer geringen einstellbaren Kraft auf dem zu bearbeitenden Boden aufliegt und in einem einstellbaren Abstand leicht über diesen hinwegzufahren ist. Außerdem soll das Arbeitsgerät bei Bodenunebenheiten selbsttätig nach oben ausweichen können, Beschädigungen des Bodens und auch der Bodenbearbeitungswerkzeuge sollen somit vermieden werden. Ferner sollen der Bauaufwand gering und eine einfache betriebssichere Handhabung gewährleistet sein.

Gemäß der Erfindung wird dies bei einer Vorrichtung der vorgenannten Art dadurch erreicht, daß an dem Traghebel zwei unabhängig voneinander um lotrechte Achsen seitlich und um parallel zu der in Fahrtrichtung der Vorrichtung angebrachten Achse verlaufende Achsen verschwenkbare als verstellbare Arbeitsgeräte ausgebildete Schwenkarme angeordnet sind.

Hierbei ist es angebracht, das äußere der Arbeitsgeräte an einem an dem Joch verschwenkbar angebrachten Verbindungshebel mittels eines elastischen Gliedes aufzuhängen und durch eine Servoeinrichtung zu verstellen. Des weiteren können, um beispielsweise beiderseits einer Leitplanke zu mähen, die parallel zur Schwenkachse des Tragrahmens verlaufenden, den Arbeitsgeräten zugeordneten Verstellachsen mit lotrechtem Abstand zu den Bodenbearbeitungswerkzeugen, vorzugsweise etwa in Höhe der Schwenkachse des Tragrahmens, angeordnet werden.

An dem Tragrahmen können selbstverständlich auch mehrere ein- oder beidseitig von diesem angeordnete Arbeitsgeräte angebracht werden, die jeweils mittels eines Joches und eines Traghebels um eine vorzugsweise gemeinsame Achse unabhängig voneinander begrenzt verschwenkbar zu halten sind.

Vorteilhaft ist es des weiteren, den Traghebel mittels eines mit Abstand zu der Schwenkachse des Joches angeordneten elastischen Gliedes in Form einer Zugfeder, eines Gummibandes, einem Gasspeicher oder dgl. an dem Joch aufzuhängen, wobei der Verstellweg des elastischen Gliedes durch eine Kette oder dgl. begrenzt sein sollte.

Zweckmäßig ist es ferner, um leicht eine Anpassung an unterschiedliche Arbeitsgeräte vornehmen zu können oder um die Antriebsglieder zu spannen, den Traghebel längenveränderbar, vorzugsweise aus zwei ineinander verschiebbar geführten und in unterschiedlichen Lagen arretierbaren Profilen auszubilden.

Die Arbeitsgeräte sollten über ein kardanisch aufgehängtes Winkelgetriebe oder dgl. an dem freien Ende des Traghebels angelenkt und mittels einer an dem Traghebel abgestützten Servoeinrichtung um die parallel zur Längsachse des Tragrahmens verlaufende Achse verschwenkbar gehalten sein.

Zur verschwenkbren Lagerung des Joches und des Traghebels kann in den Tragrahmen eine Hülse verdrehbar eingesetzt werden, mit der das Joch fest verbunden und auf der der Traghebel verschwenkbar gelagert ist. Nach einer andersartigen Ausgestaltung können aber auch das Joch und der Traghebel auf einer in den Tragrahmen eingesetzten Hülse oder einer Welle unabhängig voneinander verdrehbar gelagert werden.

Um die Antriebsenergie in einfacher Weise den Bodenbearbeitungswerkzeugen zuzuführen, kann durch die in dem Tragrahmen angeordnete, das Joch und den Traghebel abstützende Hülse eine mit der Zapfwelle oder einem anderen Antriebsglied des Fahrzeuges kuppelbare Antriebswelle hindurchgeführt werden, die über einen Keilriementrieb, einen Zahnriementrieb, eine Gelenkwelle oder dgl. sowie dem an dem freien Ende des Traghebels angeordneten Winkelgetriebe mit den Bodenbearbeitungswerkzeugen trieblich verbunden ist.

Die gemäß der Erfindung ausgebildete Vorrichtung zur seitlich auskragenden Halterung eines Arbeitsgerätes an einem Fahrzeug ist nicht nur einfach in der konstruktiven Ausgestaltung und somit ohne Schwierigkeiten auf wirtschaftliche Weise herstellbar, sondern auch leicht zu handhaben und ermöglicht es vor allem, daß die Gewichtskraft des Arbeitsgerätes in allen Betriebsstellungen ausgeglichen ist, so daß dieses nur mit einer geringen einstellbaren Kraft auf dem zu bearbeitenden Boden aufliegt. Werden nämlich an dem Traghebel zwei als verstellbare Arbeitsgeräte ausgebildete Schwenkarme angeordnet, die unabhängig voneinander um lotrechte Achsen seitlich und um in Fahrtrichtung der Vorrichtung verlaufende Achsen verschwenkbar sind, so werden die Arbeitsgeräte gewissermaßen in Schwebe gehalten, so daß diese sich stets der jeweiligen Bodenform anpassen und weder die Bodenbearbeitungswerkzeuge noch der Boden durch diese beschädigt werden.

Die Arbeitsgeräte können vielmehr Hindernisse umgehen und selbsttätig nach oben ausweichen. Auch ist die Einstellung auf den zu bearbeitenden Bodenbereich, da ein Verschwenken um zwei zueinander parallele Achsen möglich ist, in kurzer Zeit und auf einfache Weise vorzunehmen. Und da die Arbeitsgeräte somit mit geringer Kraft auf dem Boden aufliegen, gleiten diese gut über diesen hinweg, die erforderliche Antriebsleistung ist demnach erheblich geringer als bei einem nicht entlasteten Arbeitsgerät.

In der Zeichnung ist ein Ausführungsbeispiel der gemäß der Erfindung ausgebildeten Vorrichtung zur seitlich auskragenden Halterung eines Arbeitsgerätes an einem Fahrzeug dargestellt, das nachfolgend im einzelnen erläutert ist. Hierbei zeigen:

Fig. 1    die Vorrichtung in Vorderanicht,
Fig. 2    die Vorrichtung nach Fig. 1 in Draufsicht,
Fig. 3    die Vorrichtung nach Fig. 1 mit zwei aufgehängten Arbeitsgeräten in Vorderansicht und
Fig. 4    die Vorrichtung nach Fig. 3 in Draufsicht und mit Arbeitsgeräten in einer andersartigen Betriebsstellung.

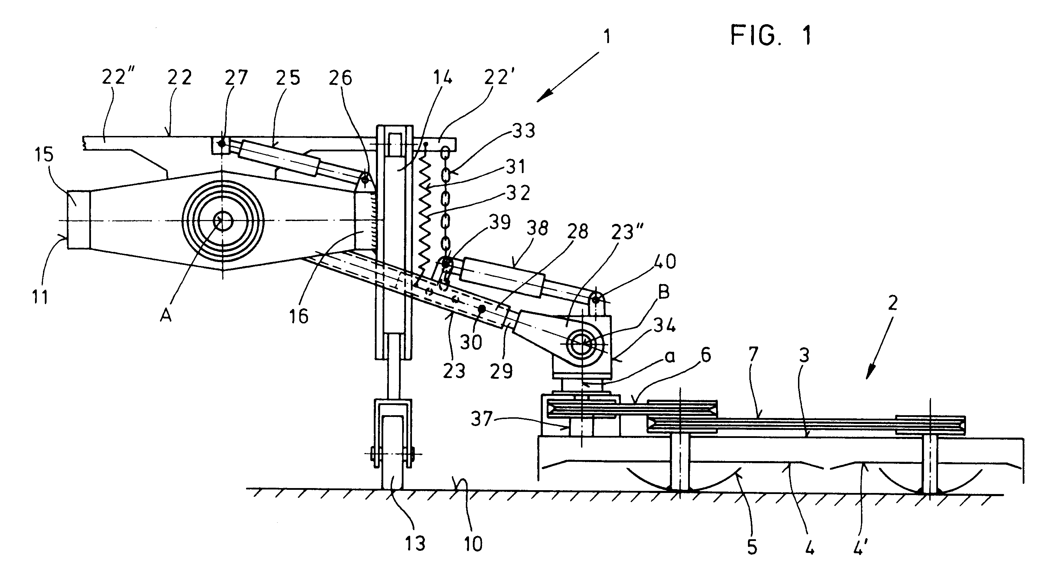

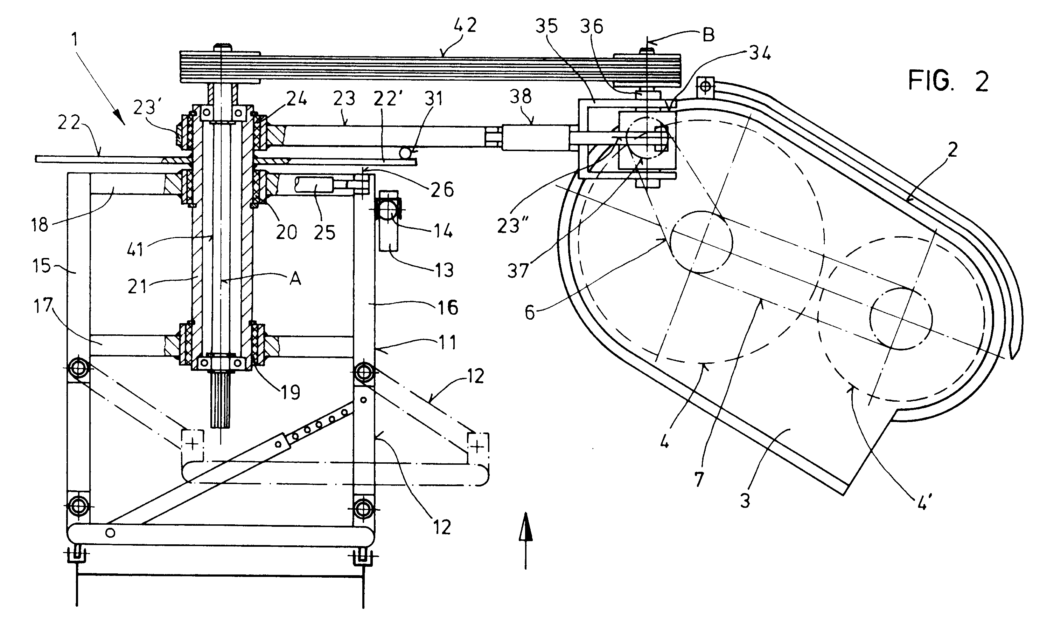

Die in den Fig. 1 und 2 dargestellte, mit 1 bezeichnete Vorrichtung dient zur seitlich auskragenden Halterung eines als Schwenkarm ausgebildeten Arbeitsgerätes 2 in Form eines Randstreifenmähers an einem Fahrzeug. Dazu sind in einem Gehäuse 3 um lotrechte Achsen antreibbare Bodenbearbeitungswerkzeuge 4 und 4' angeordnet, die jeweils mittels eines Gleittellers 5 auf dem Boden 10 abgestützt und über Keilriementriebe 6 und 7 antreibbar sind.

Die an der Front- oder Heckseite eines Fahrzeuges anzubringende und in Pfeilrichtung verfahrbare Vorrichtung 1 zur Halterung des Arbeitsgerätes 2 besteht aus einem Tragrahmen 11, der aus Längsstreben 15 und 16 sowie aus Querstreben 17 und 18 zusammengesetzt ist, einem an diesem vorgesehenen Joch 22 sowie einem Traghebel 23, der, wie auch das Joch 22, begrenzt verschwenkbar gelagert und mittels eines elastischen Gliedes 31 an dem Joch 22 aufgehängt ist. Zur verschwenkbaren Lagerung des Joches 22 und des Traghebels 23 ist bei dem gezeigten Ausführungsbeispiel eine mittels Gleitlager 19 und 20 in den Querstreben 17 und 18 des Tragrahmens 11 verdrehbar gelagerte Hülse 21 vorgesehen, an der das Joch 22 angeschweißt und auf der der Traghebel 23 mit dem einen Ende 23' über ein weiteres Gleitlager 24 verdrehbar gelagert ist.

Das Joch 22 und der Traghebel 23 sind somit unabhängig voneinander verschwenkbar. Selbstverständlich ist es aber auch möglich, die Hülse 21 oder ein anderes vergleichbares Lager fest an dem Tragrahmen 11 anzubringen und das Joch 22 und den Traghebel 23 verschwenkbar auf diesem anzuordnen.

An dem anderen Ende 23'' des Traghebels 23 ist in einem Gabelstück 35 über ein Winkelgetriebe 34 das Arbeitsgerät 2 um die Achse B, die parallel zur Längsachse A des Tragrahmens 11, die die Schwenkachse des Joches 22 und des Tragrahmens 23 bildet, verläuft, verschwenkbar gehalten. Dies wird mittels einer Welle 36 bewerkstelligt, über die das Winkelgetriebe 34 kardanisch in dem Gabelstück 35 aufgehängt und die die Eingangswelle des Winkelgetriebes 34 ist, von der die eingeleitete Antriebsenergie auf eine vertikal angeordnete und über den Keilriementrieb 6 mit dem Bodenbearbeitungswerkzeug 4 trieblich verbundene Abtriebswelle 37 in dem Winkelgetriebe 34 übertragen wird. Über einen Keilriementrieb 42 steht die Welle 36 des Winkelgetriebes 34 mit einer in der Hülse 21 gelagerten Antriebswelle 41 in Triebverbindung, die mit der Zapfwelle des Fahrzeuges oder einem anderen Ahtriebsglied kuppelbar ist.

Der Traghebel 23 und das von diesem gehaltene Arbeitsgerät 2 ist über das als Zugfeder 32 ausgebildete elastische Glied 31 an dem einen Arm 22' des zweiarmig T-förmig gestalteten Joches 22 augehängt und der Verstellweg der Zugfeder 32 ist durch eine Kette 33 begrenzt. Somit ist über die Zugkraft der Zugfeder 32 einstellbar, mit welcher Kraft das Arbeitsgerät 2 auf dem zu bearbeitenden Boden 10 aufliegt, und zwar unabhängig von der jeweiligen Schrägstellung. Die Gewichtskraft des Arbeitsgerätes 2 wird somit weitgehend ausgeglichen und dieses kann, sobald es auf eine Bodenerhebung aufgleitet, selbsttätig nach oben durch Verschwenken des Traghebels 23 um die Achse A ausweichen. Der Widerstand, der bei einer Vorwärtsbewegung des als um die lotrechte Achse a verschwenkbar ausgebildeten Arbeitsgerätes 2 zu überwinden ist, ist somit gering.

Um das Arbeitsgerät 2 auf den zu bearbeitenden Bodenbereich leicht einstellen zu können, ist das Joch 22 und mit diesem der an diesem aufgehängte Traghebel 23 mittels einer Servoeinrichtung 25 und das Arbeitsgerät 2 selbst mittels einer weiteren Servoeinrichtung 38 um die Achsen A und B verschwenkbar. Dazu ist die Servoeinrichtung 25 mittels eines Gelenkbolzens 26 an der Längsstrebe 16 des Tragrahmens 11 und mittels eines Gelenkbolzens 27 mit Abstand zu der Achse A an dem Joch 22 angelenkt, die Servoeinrichtung 38 ist mittels Gelenkbolzen 39 und 40 an dem Traghebel 23 und dem Winkelgetriebe 34 abgestützt.

Wird die Servoeinrichtung 25, die in einfacher Weise als ein in einem Zylinder eingesetzter und von Druckmittel beaufschlagbarer Kolben ausgebildet sein kann, betätigt, so wird das Joch 22 um die Achse A beispielsweise nach links verschwenkt. Und da der Traghebel 23 mittels des elastischen Gliedes 31 an diesem aufgehängt ist, wird dieser mitgenommen, so daß das Arbeitsgerät 2 angehoben wird und somit leicht auf die Höhenlage des zu bearbeitenden Bodenbereiches gegenüber dem Fahrzeug einzustellen ist. Und durch entsprechende Betätigung der Servoeinrichtung 38 ist das Arbeitsgerät 2 um die Achse B zu verschwenken, dieses kann demnach, und zwar unabhängig von der Betriebsstellung des Joches 22, ohne weiteres und kurzzeitig auch auf den Neigungswinkel z. B. einer Böschung ausgerichtet werden. Die Gewichtskraft des Arbeitsgerätes 2 ist dabei in allen Betriebsstellungen durch das elastische Glied ausgeglichen.

Der Traghebel 23, der zusammen mit dem Arbeitsgerät 2 auch auf der anderen Seite des Fahrzeuges an dem Arm 22'' des Joches 22 aufgehängt werden kann, besteht aus zwei verschiebbar ineinander geführten Profilen 28 und 29, die mittels eines Arretierungsbolzens 30 verbunden sind. Auf diese Weise kann leicht die Ausladung verändert oder die Spannung des Keilriementriebes 42 eingestellt werden.

Der Tragrahmen 11 ist, um diesen seitlich gegenüber dem Fahrzeug verstellen zu können, mittels eines Paralellogrammgestänges 12 an diesem angebracht. Auch eine Höheneinstellung des Tragrahmens 11, der mittels eines Laufrades 13, das durch eine Zylinder-Kolben-Anordnung 14 höhenverstellbar gehalten ist und als Pilotrad dient, ohne weiteres möglich.

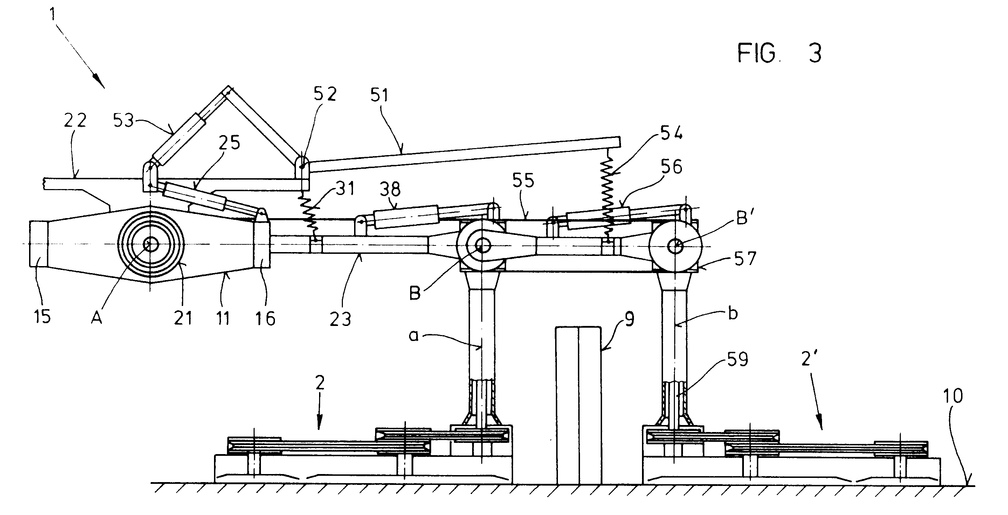

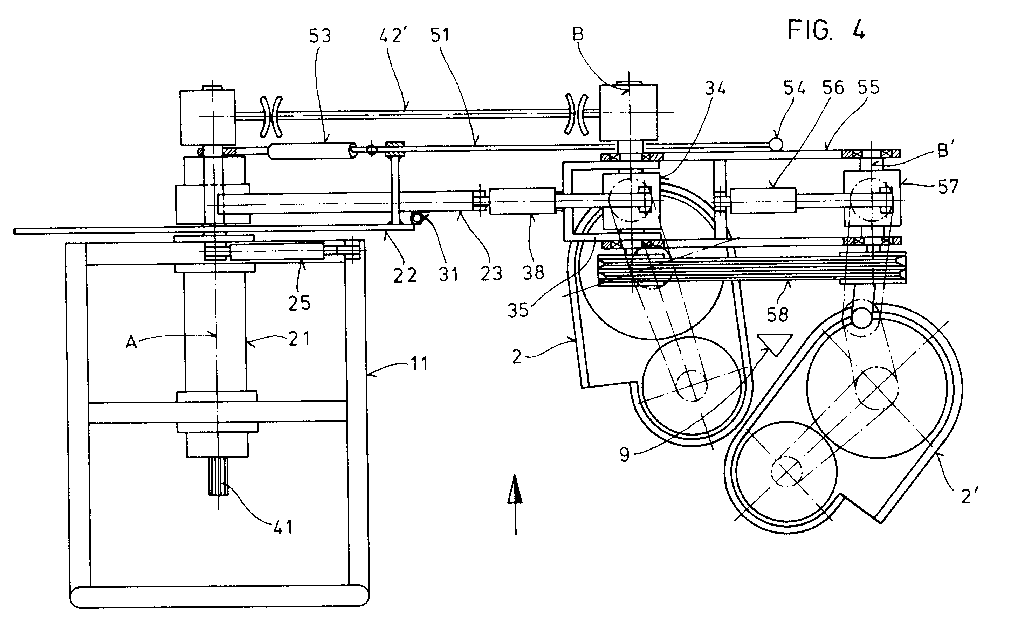

Bei der in den Fig. 3 und 4 gezeigten Ausgestaltung der Vorrichtung 1 ist ein weiteres Arbeitsgerät 2' an dem Joch 22 aufgehängt. Dazu ist an diesem um einen Gelenkbolzen 52 verdrehbar ein Winkelhebel 51 angebracht, auf dessen eines Ende eine Servoeinrichtung 53 einwirkt und an dessen anderen Ende über ein elastisches Glied 54 in Form einer Zugfeder ein Hebel 55 aufgehängt ist, an dem über ein Winkelgetriebe 57 das Arbeitsgerät 2' gehalten ist. Mittels einer Servoeinrichtung 56 ist das über einen Keilriementrieb 58 mit dem Arbeitsgerät 2 trieblich verbundene Arbeitsgerät 2', da das Winkelgetriebe 57 kardanisch aufgehängt ist, um die Achse B' verschwenkbar. Zur trieblichen Verbindung mit der Antriebswelle 41 dient hierbei ein schematisch dargestellter Kardantrieb 42'. Und da die Bodenbearbeitungswerkzeuge der Arbeitsgeräte 2 und 2', die um die vertikalen Achsen a und b verschwenkbar sind, jeweils über verlängerte Zwischenwellen 59 mit den Winkelgetrieben 34 und 57 verbunden sind, ist es möglich, beiderseits eines Pfostens 9 oder einer Leitplanke gleichzeitig den Boden zu bearbeiten.

Bei der Ausgestaltung nach den Fig. 3 und 4 kann das Arbeitsgerät 2' somit zusammen mit dem Arbeitsgerät 2 um die Achse A geschwenkt werden, mit Hilfe der Servoeinrichtung 53 ist aber auch ein Verschwenken um den Gelenkbolzen 52 sowie mittels der Servoeinrichtung 56 um die Achse B' möglich. Die Arbeitsgeräte 2 und 2' können demnach weitgehend unabhängig voneinander auf die Form des jeweils zu bearbeitenden Bodenbereiches ausgerichtet werden.

## Patentansprüche

1.　Vorrichtung (1) zur seitlich auskragenden Halterung eines Arbeitsgerätes (2) an einem Fahrzeug, insbesondere eines Randstreifenmähers, bestehend aus einem an der Front- oder Heckseite des Fahrzeuges anbringbaren Tragrahmen (11), an dem das die Bodenbearbeitungswerkzeuge (4, 4') aufnehmende, vorzugsweise als Schwenkarm ausgebildete, Arbeitsgerät (2) über einen verschwenkbar gelagerten Traghebel (23) derart angelenkt ist, daß das Arbeitsgerät (2) um eine in Fahrtrichtung der Vorrichtung (1) verlaufende Achse (B) verschwenkbar gehalten ist und wobei der Tragrahmen (11) mit einem Joch (22) versehen ist, das um eine weitere in Fahrtrichtung der Vorrichtung (1) angebrachte Achse (A) begrenzt verschwenkbar ist, und der Traghebel (23) konzentrisch zu der Schwenkachse (A) des Joches (22) verschwenkbar gelagert und an diesem abgestützt ist,

**dadurch gekennzeichnet,**

daß an dem Traghebel (23) zwei unabhängig voneinander um lotrechte Achsen (a, b) seitlich und um parallel zu der in Fahrtrichtung der Vorrichtung (1) angebrachten Achse (A) verlaufende Achsen (B, B') verschwenkbare, als verstellbare Arbeitsgeräte (2, 2') ausgebildete Schwenkarme angeordnet sind.

2. Vorrichtung nach Anspruch 1,

**dadurch gekennzeichnet,**

daß das äußere der Arbeitsgeräte (2') an einem an dem Joch (22) verschwenkbar angebrachten Verbindungshebel (51) mittels eines elastischen Gliedes (54) aufgehängt und durch eine Servoeinrichtung (53) verstellbar ist.

3. Vorrichtung nach Anspruch 1 oder 2,

**dadurch gekennzeichnet,**

daß die parallel zur Schwenkachse (A) des Tragrahmens (11) verlaufenden, den Arbeitsgeräten (2, 2') zugeordneten Verstellachsen (B, B') mit lotrechtem Abstand zu den Bodenbearbeitungswerkzeugen, vorzugsweise etwa in Höhe der Schwenkachse (A) des Tragrahmens (11), angeordnet sind.

4. Vorrichtung nach einem oder mehreren der Ansprüche 1 bis 3,

**dadurch gekennzeichnet,**

daß an dem Tragrahmen (11) mehrere einoder beidseitig von diesem angeordnete Arbeitsgeräte (2, 2') jeweils mittels eines Joches (22) und eines Traghebels (23) um eine, vorzugsweise gemeinsame, Achse unabhängig voneinander begrenzt verschwenkbar angebracht sind.

5. Vorrichtung nach einem oder mehreren der Ansprüche 1 bis 4,

**dadurch gekennzeichnet,**

daß der Traghebel (23; 55) mittels eines mit Abstand zu der Schwenkachse (A) des Joches (22) angeordneten elastischen Gliedes (31) in Form einer Zugfeder (32; 54), eines Gummibandes, einem Gasspeicher oder dgl. an dem Joch (22) aufgehängt ist.

6. Vorrichtung nach Anspruch 5,

**dadurch gekennzeichnet,**

daß der Verstellweg des elastischen Gliedes (31) durch eine Kette (33) oder dgl. begrenzt ist.

7. Vorrichtung nach einem oder mehreren der Ansprüche 1 bis 6,

**dadurch gekennzeichnet,**

daß der Traghebel (23; 55) längenveränderbar, vorzugsweise aus zwei ineinander verschiebbar geführten und in unterschiedlichen Lagen arretierbaren Profilen (28, 29) ausgebildet ist.

8. Vorrichtung nach einem oder mehreren der Ansprüche 1 bis 7,

**dadurch gekennzeichnet,**

daß die Arbeitsgeräte (2, 2') jeweils über ein kardanisch aufgehängtes Winkelgetriebe (34; 57) oder dgl. an dem freien Ende (23'') des Traghebels (23; 55) angelenkt sind.

9. Vorrichtung nach einem oder mehreren der Ansprüche 1 bis 8,

**dadurch gekennzeichnet,**

daß eines oder beide Arbeitsgeräte (2, 2') mittels einer an dem Traghebel (23; 55) abgestützten Servoeinrichtung (38; 56) um die parallel zur Längsachse (A) des Tragrahmens (11) verlaufende Achse (B, B') verschwenkbar gehalten ist.

10. Vorrichtung nach einem oder mehreren der Ansprüche 1 bis 9,

**dadurch gekennzeichnet,**

daß zur verschwenkbaren Lagerung des Joches (22) und des Traghebels (23) in den Tragrahmen (11) eine Hülse (21) verdrehbar eingesetzt ist, mit der das Joch (22) fest verbunden und auf der der Traghebel (23) verschwenkbar gelagert ist.

11. Vorrichtung nach einem oder mehreren der Ansprüche 1 bis 9,

**dadurch gekennzeichnet,**

daß das Joch (22) und der Traghebel (23) auf einer in den Tragrahmen (11) eingesetzten Hülse oder einer Welle unabhängig voneinander verdrehbar gelagert sind.

12. Vorrichtung nach Anspruch 10,

**dadurch gekennzeichnet,**

daß durch die in dem Tragrahmen (11) angeordnete, das Joch (22) und den Traghebel (23) abstützende Hülse (21) eine mit der Zapfwelle oder einem anderen Antriebsglied des Fahrzeuges kuppelbare Antriebswelle (41) hindurchgeführt ist, die über einen Keilriementrieb (42), einen Zahnriementrieb, eine Gelenkwelle (42') oder dgl. sowie dem an dem freien Ende (23'') des Traghebels (23) angeordneten Winkelgetriebe (34) mit den Bodenbearbeitungswerkzeugen (4, 4') trieblich verbunden ist.

## Claims

1. Device (1) for the laterally projecting mounting of a tool implement (2) on a vehicle, in particular on a verge mower, comprising a carrier frame (11) which can be fitted to the front or rear of a vehicle and to which the tool implement (2) for supporting the earth-working implements (4, 4') can be fitted, said tool implement being arranged preferably as a swivel arm controlled by a pivot-mounted load-bearing lever (23) in such a way that the tool implement (2) is arranged on a shaft (B) aligned in the direction of travel whereby the tool implement (2) can swivel on this shaft and whereby the carrier frame (11) is provided with a yoke (22) whose pivot motion is limited by another shaft (A), also aligned in the direction of travel, and with the load-bearing lever (23) pivot-mounted concentrically on and supported by swivel-shaft (A) on yoke (22),

**characterized in that**

two mutually independent swivel arms arranged as adjustable tool implements (2, 2') are pivot-mounted on lateral perpendicular shafts (a, b) arranged on shafts (B, B') parallel to the shaft (A) aligned in the direction of travel of the device.

2. Device as claimed in claim 1,

**characterized in that**

the outermost of the tool implements (2') is mounted by means of a flexible member (54) on a connecting lever (51) arranged on the yoke (22) and can be adjusted by means of a servo device (53).

3. Device as claimed in claim 1 or 3,

**characterized in that**

The adjustable shafts (B, B') allocated to the tool implements (2, 2') and parallel to the swivel shaft (A) on the carrier frame (11) are arranged with a vertical offset to the earth-working implements, preferably at the same height as the swivel shaft (A) of the carrier frame (11).

4. Device as claimed in one or more of claims 1 to 3,

**characterized in that**

each of several tool implements (2, 2') arranged on one or both sides of the carrier frame (11) is independently swivel-mounted by means of a yoke (22) and a load-bearing lever (23) on a single, preferably common, shaft.

5. Device as claimed in one or more of claims 1 to 4,

**characterized in that**

the load-bearing lever (23; 55) is mounted on the yoke (22) by means of a flexible member (31) arranged at a distance from the swivel-shaft (A) of the yoke (22) as a tension spring (32; 54), a rubber strip, a gas accumulator or some similar item.

6. Device as claimed in claim 5,

**characterized in that**

the extent of travel of the flexible member (31) is limited by a chain (33) or similar item.

7. Device as claimed in one or more of claims 1 to 6,

**characterized in that**

the load-bearing lever (23; 55) is arranged as an extensible (telescopic) unit preferably comprising a twin sliding profile sections (28, 29) which can be locked in different positions.

8. Device as claimed in one or more of claims 1 to 7,

**characterized in that**

each of the tool implements (2, 2') is steered by means of an angle-drive transmission (34; 57) or similar item mounted on a universal joint arranged on the free end (23'') of the load-bearing lever.

9. Device as claimed in one or more of claims 1 to 8,

**characterized in that**

one or both of the tool implements (2, 2') is swivel-mounted on the shaft (B, B') which runs parallel to the longitudinal axis (A) of the carrier frame (11), by means of a servo device (38; 56) arranged on the load-bearing lever (23; 55).

10. Device as claimed in one or more of claims 1 to 9,

**characterized in that**

a rotatable sleeve (21) is arranged in the carrier frame (11) as a pivot mount for the yoke (22) and the load-bearing lever (23), said sleeve being rigidly connected to the yoke (22) and providing a swivel-mount for the load-bearing lever (23).

11. Device as claimed in one or more of claims 1 to 9,

**characterized in that**

the yoke (22) and load-bearing lever (23) are pivot-mounted together on a sleeve arranged in the carrier frame (11) or separately on a shaft.

12. Device as claimed in claim 10,

**characterized in that**

a disengagable drive shaft (41) powered by the PTO shaft or some other drive member on the vehicle is inserted through the sleeve arranged in the carrier frame (11) and supporting the yoke (22) and load-bearing lever (23), said drive shaft being positively connected to the earth-working implements (4, 4') by means of a Vee-belt drive (42), a toothed belt drive, a propshaft (42') or similar item and also being connected to the angle-drive transmission (34) arranged on the free end (23'') of the load-bearing lever (23).

**Revendications**

1. Dispositif (1) pour fixer à un véhicule un outillage (2) se projetant latéralement, notamment une tondeuse de banquette, comprenant un cadre-support (11) à fixer à l'avant ou latéralement sur le véhicule, sur lequel l'outillage (2), conçu de préférence sous la forme d'un bras pivotant supportant les outils de traitement du sol (4, 4'), est articulé au moyen d'un levier-support (23) pivotant de sorte que l'outillage (2) se laisse pivoter autour d'un axe (B) dirigé dans le sens de marche du dispositif (1), le cadre-support (11) étant muni d'un pont (22) qui se laisse pivoter dans certaines limites autour d'un autre axe (A) dirigé dans le sens de marche du dispositif (1) et le levier-support (23) étant logé concentriquement par rapport à l'axe de pivotement (A) du pont (22) et s'appuye sur celui-ci,

se caractérisant par le fait que

sur le levier-support (23), deux bras pivotants indépendants conçus sous la forme d'outillages réglables (2, 2') sont disposés de sorte qu'ils se laissent pivoter latéralement autour de deux axes perpendiculaires (a, b) et autour des axes (B, B') dirigés parallèlement à l'axe (A) disposé dans le sens de marche du dispositif (1).

2. Dispositif d'après la revendication 1,

se caractérisant par le fait que

l'outillage extérieur (2') est fixé au moyen d'un élément élastique (54) sur un levier de raccordement (51) pivotant sur le pont (22) et qu'il se laisse régler au moyen d'un mécanisme d'asservissement (53).

3. Dispositif d'après les revendications 1 ou 2,

se caractérisant par le fait que

les axes de réglage (B, B') attribués aux outillages (2, 2') et dirigés parallèlement à l'axe de pivotement (A) du cadre-support (11) sont disposés à une distance perpendiculaire des outillages de traitement du sol, de préférence au niveau de l'axe de pivotement (A) du cadre-support (11).

4. Dispositif d'après une ou plusieurs des revendications 1 à 3,

   se caractérisant par le fait que

   sur le cadre-support (11), plusieurs outillages (2, 2') disposés d'un côté ou sur les deux côtés de celui-ci se laissent pivoter au moyen d'un pont (22) et d'un levier-support (23) autour d'un axe de préférence commun, avec des mouvements limités indépendants l'un de l'autre.

5. Dispositif d'après une ou plusieurs des revendications 1 à 4,

   se caractérisant par le fait que

   le levier-support (23; 55) est accroché sur le pont (22) au moyen d'un élément élastique (31) sous la forme d'un ressort de traction (32; 54), d'une bande en caoutchouc, d'un accumulateur de gaz etc., disposé à une certaine distance de l'axe de pivotement (A) du pont (22).

6. Dispositif d'après la revendication 5,

   se caractérisant par le fait que

   la course de réglage de l'élément élastique (31) est limitée par une chaîne (33) ou un dispositif semblable.

7. Dispositif d'après une ou plusieurs des revendications 1 à 6,

   se caractérisant par le fait que

   le levier-support (23; 55) se laisse régler en longueur et est constitué de préférence de deux profilés coulissant l'un dans l'autre qui peuvent être arrêtés en positions différentes (28, 29).

8. Dispositif d'après une ou plusieurs des revendications 1 à 7,

   se caractérisant par le fait que

   les outillages (2, 2') sont articulés respectivement par un renvoi d'angle cardanique (34; 57) ou un dispositif semblable sur l'extrémité libre (23'') du levier-support (23; 55).

9. Dispositif d'après une ou plusieurs des revendications 1 à 8,

   se caractérisant par le fait

   qu'un ou les deux des outillages (2, 2') se laissent pivoter au moyen d'un mécanisme d'asservissement (38; 56) appuyé sur le levier-support (23; 55) autour de l'axe (B, B') dirigé parallèlement à l'axe longitudinal (A) du cadre-support (11).

10. Dispositif d'après une ou plusieurs des revendications 1 à 9,

    se caractérisant par le fait que

    pour le logement pivotable du pont (22) et du levier-support (23) il est monté dans le cadre-support (11) une douille rotative (21) à laquelle le pont (22) est lié rigidement et sur laquelle le levier-support (23) se laisse pivoter.

11. Dispositif d'après une ou plusieurs des revendications 1 à 9,

    se caractérisant par le fait que

    le pont (22) et le levier-support (23) se laissent tourner indépendamment l'un de l'autre sur une douille ou un arbre montés dans le cadre-support (11).

12. Dispositif d'après la revendication 10,

    se caractérisant par le fait

    qu'il passe à travers la douille (21) disposée dans le cadre-support (11) et appuyant le pont (22) et le levier-support (23), un arbre d'entraînement (41) qui peut être attelé à la prise de force ou un autre élément d'entraînement du véhicule et dont la force est transmise aux outils de traitement du sol (4, 4') par l'intermédiaire d'une courroie trapézoïdale (42), une courroie dentée, un arbre à cardan (42') etc. ainsi que le renvoi d'angle (34) disposé sur l'extrémité libre (23'') du levier-support (23).

FIG. 1

EP 0 181 997 B1

FIG. 2

FIG. 3

FIG. 4

EP 0 181 997 B1